# FASCICULE DE BREVET EUROPEEN

(11) **EP 4 660 687 B1**
(45) Date de publication et mention de la délivrance du brevet: **25.11.2026**
(21) Numéro de dépôt: 25173038.8
(22) Date de dépôt: 28.04.2025
(51) Int. Cl.: G02B 27/01

(54) **SYSTÈME D'AFFICHAGE TÊTE HAUTE D'UN VÉHICULE AUTOMOBILE**
HEAD-UP-ANZEIGESYSTEM EINES KRAFTFAHRZEUGS
HEAD-UP DISPLAY SYSTEM OF A MOTOR VEHICLE

(30) Priorité: 07.06.2024 FR 2406050
(43) Date de publication de la demande: 10.12.2025
(73) Titulaire: Stellantis Auto SAS, 78300 Poissy (FR); FCA US LLC, Auburn Hills, MI 48326-2766 (US)
(72) Inventeur: GAREZ, Louis, 92130 Issy-les-Moulineaux (FR); TAHHAN, Aref Antoine, 78170 La Celle-Saint-Cloud (FR); AMMARI, Yasmine, 94430 Chennevières-sur-Marne (FR); DELCROIX, Margot, 75015 Paris (FR); ARIARATNAM, Ramanna Raoul, 93700 Drancy (FR)
(74) Mandataire: ESIP

(56) Documents cités:
- EP-A1- 4 141 517
- US-A1- 2021 360 209
- US-A1- 2023 076 388
- US-B1- 11 169 377

## Description

### Domaine technique

La présente invention se rapporte à un système d'affichage tête haute d'un véhicule automobile et à un véhicule automobile comprenant un tel système.

### État de la technique

Dans le domaine des systèmes d'assistance à la conduite et de la détection d'obstacles, diverses solutions existent, chacune avec ses dispositifs, architectures et procédés spécifiques.

Ceux-ci génèrent de plus en plus d'information à répartir sur les écrans de conduite. Comme cela peut poser des problèmes de sécurité en détournant le regard du conducteur de la route, le combiné d'instrumentation est remplacé ou complété par un afficheur tête haute.

L'affichage tête haute (en anglais « Head-up-Display [HUD] ») est une technologie provenant de l'aéronautique et qui commence à diffuser dans l'industrie automobile. Par différents mécanismes, il s'agit de projeter des informations à la hauteur du parebrise, ce qui permet au conducteur de les lire sans quitter la route des yeux. Cela offre donc un gain de sécurité.

Un affichage tête haute se compose de trois éléments principaux : une unité d'imagerie, un module optique et la surface de projection. La lumière frappe d'abord le module optique, la pièce maîtresse du système affichage tête haute. C'est dans ce que l'on appelle le collimateur que se trouve la physique simple, mais précise. Une lentille ou un miroir asphérique décompose la lumière LED divergente en rayons parallèles. En raison de l'espace limité de montage, plusieurs lentilles et miroirs pliables sont utilisés.

Dans la technologie d'affichage tête haute, la surface de projection est également appelée combinateur. Il s'agit d'un miroir semi-transparent qui laisse passer la lumière ambiante et reflète la lumière de l'affichage tête haute, créant ainsi une vue commune de l'environnement et de l'affichage tête haute. Si le combinateur est intégré au parebrise, on parle d'affichage tête haute de parebrise. S'il est réalisé sous la forme d'une plaque en matière plastique externe insérée entre le conducteur et le parebrise, le système est appelé combinateur d'affichage tête haute.

Actuellement, pour leur grande majorité, les afficheurs tête haute sont uni focales, c'est-à-dire que toutes les informations sont projetées à la même distance focale, ce qui donne l'impression au conducteur de lire ces informations dans un plan.

De façon à rendre plus lisibles les informations, les véhicules haut de gamme commencent à intégrer des afficheurs tête haute multiplan ou multifocale c'est-à-dire des afficheurs capables de projeter des informations à différentes distances focales, ce qui donne l'impression au conducteur que ces informations sont plus ou moins éloignées. L'article de Lv, Zhenlv, Juan Liu and Liangfa Xu. « A Multi-Plane Augmented Reality Head-Up Display System Based on Volume Holographic Optical Elements With Large Area. » IEEE Photonics Journal 13 (2021) : 1-8. décrit un tel système. Les expressions « mutliplan » et « multifocale » seront utilisées indifféremment dans ce texte.

Un afficheur tête haute multifocale comprend dans un mode de réalisation, une source de lumière capable d'envoyer, par exemple, trois signaux lumineux différents sur trois miroirs motorisés qui renvoient les rayons lumineux sur un combinateur. Les trois rayons lumineux ayant des trajets différents sont focalisés de telle sorte que la distance focale apparait différente pour chaque rayon. Ainsi, un conducteur aura l'impression de lire des informations dans trois plans différents.

Un autre mode de réalisation d'un afficheur tête haute multifocale comprend un seul miroir, mais autant de sources lumineuses que de plans de visualisation.

Ces modes de réalisation, en multipliant les pièces, sont couteux et réservent donc ce type d'équipement à des véhicules haut de gamme.

Il existe donc un réel besoin d'un système d'affichage tête haute d'un véhicule automobile qui résolvent tout ou partie des inconvénients précités.

### Description de l'invention

Pour résoudre un ou plusieurs des inconvénients cités précédemment, selon un premier mode de réalisation, un système d'affichage tête haute d'un véhicule automobile comprend :
- une unité d'imagerie adaptée pour projeter une pluralité de flux d'images sur;
- un miroir comprenant une pluralité de zones réfléchissantes ; et
- un combinateur ; et dans lequel
- chaque zone réfléchissante renvoyant un flux d'images de la pluralité de flux d'images vers le combinateur, le chemin optique entre l'unité d'imagerie et le combinateur associé à une zone réfléchissante est de longueur différente de celles des chemins optiques associés aux autres zones réfléchissantes de sorte à former sur le combinateur, pour un observateur, des plans avec des profondeurs de champ différentes pour chaque flux d'images projeté via une des zones réfléchissantes ; et l'unité d'imagerie est mobile en rotation autour d'un axe et mue par un moteur synchronisé avec l'unité d'imagerie pour projeter successivement chaque flux d'images sur une zone réfléchissante déterminée.

Ainsi, le système ne comprend qu'une unité d'imagerie, un moteur et un miroir, ce qui diminue les coûts.

Des caractéristiques ou des modes de réalisation particuliers, utilisables seuls ou en combinaison sont :
- la fréquence d'affichage d'une image donnée est supérieure à 20 images par seconde ;
- le système comprend en outre une came pilotée par le moteur et associée à l'unité d'imagerie pour faire osciller l'unité d'imagerie autour de l'axe ;
- le système comprend en outre un capteur de position angulaire de l'unité d'imagerie connecté à l'unité d'imagerie pour synchroniser les flux d'images avec la position de l'unité d'imagerie ;
- il y a autant de flux d'images à projeter que de zones réfléchissantes ;
- les flux d'images sont formés d'images évoluant avec le temps ; et/ou
- le miroir comprend deux ou trois zones réfléchissantes.

Dans un second mode de réalisation, un véhicule automobile comprend un système selon le premier mode de réalisation.

### Brève description des figures

L'invention sera mieux comprise à la lecture de la description qui suit, faite uniquement à titre d'exemple, et en référence aux figures en annexe dans lesquelles :
- [Fig 1] représente une vue de dessus d'un véhicule comprenant un système d'affichage tête haute selon un mode de réalisation ; et
- [Fig 2] représente le détail du mode de réalisation du système d'affichage de la Fig. 1.

### Modes de réalisation

Les modes de réalisation présentés ci-après font référence à un véhicule automobile, une voiture. Cependant, l'homme du métier comprend que ceux-ci sont également utilisables avec d'autres types de véhicule tels que les camionnettes, les vans, etc.

Les termes « avant », « arrière », « haut », « bas », « transverse » s'entendent par rapport au véhicule.

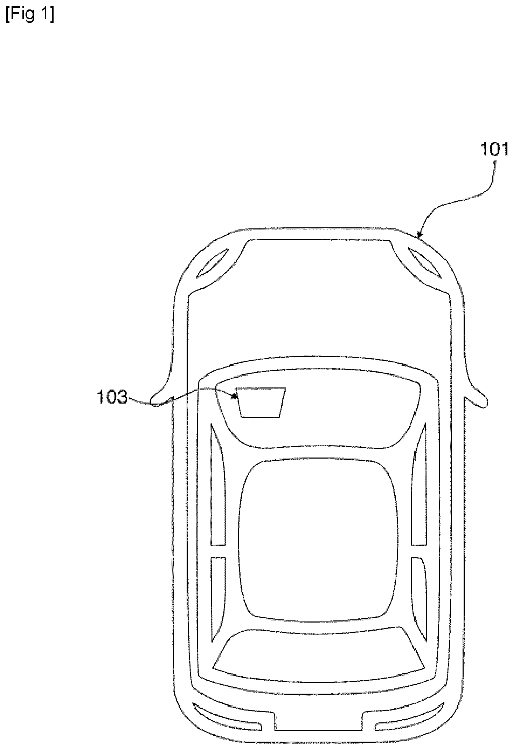

En référence à la Fig. 1, un véhicule automobile 101 comprend un système 103 d'affichage tête haute multifocale.

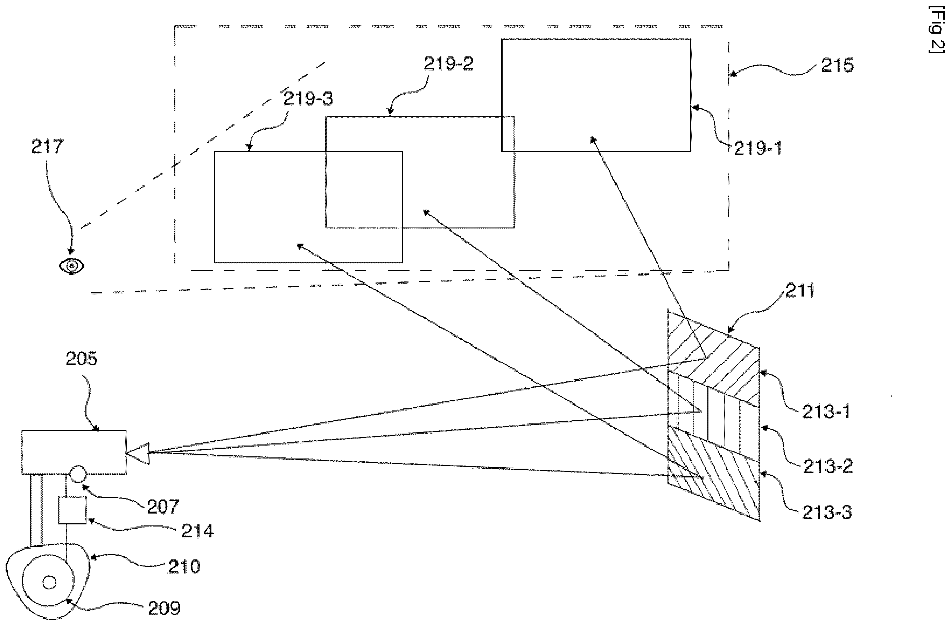

Le système 103 comprend, Fig. 2, une unité d'imagerie 205 adaptée pour projeter une pluralité de flux d'images. Ces images sont par exemple composées de graphiques permettant de visualiser différents paramètres nécessaires à la conduite du véhicule 101, ces paramètres provenant de différents dispositifs du véhicule 101. Par exemple, le système 103 est adapté pour projeter trois flux d'images différents. Ainsi, les images d'un flux peuvent évoluer pour, par exemple, tenir compte de l'évolution du paramètre représenté graphiquement. Dans un but pédagogique, quand, dans la suite de cette description, une image sera mentionnée, cela sous-entendra une image d'un flux d'images ou un flux d'images selon le contexte.

L'unité d'imagerie 205 est montée mobile en rotation autour d'un axe 207. La rotation de l'unité d'imagerie 205 est assurée par un moteur 209, par exemple un moteur pas-à-pas associé à une came 210.

L'unité d'imagerie 205 projette les images sur un miroir 211 comprenant une pluralité de zones réfléchissantes 213. Dans ce mode de réalisation, le miroir 111 comprend 3 zones réfléchissantes, 213-1, 213-2, 213-3.

L'unité d'imagerie 205 est focalisée de telle sorte qu'à un instant donné, une image n'est projetée que sur une seule zone réfléchissante 213 et le moteur 209 est synchronisé avec l'unité d'imagerie 205 avec l'aide d'un capteur angulaire 214 de telle sorte qu'à chaque image est associée une des zones réfléchissantes 213 sur laquelle elle est projetée.

En sortie du miroir 211, les flux optiques sont dirigés vers un combinateur 215 permettant à un observateur 217 de voir les images.

La position des zones réfléchissantes 213 est telle que les chemins optiques associés à chaque zone réfléchissante ont des longueurs différentes entre eux, ce qui génère pour l'observateur des images selon des profondeurs de champ différentes, donc dans des plans optiques multiples. Dans ce mode de réalisation, l'observateur voit des images dans trois plans différents, 219-1, 219-2, 219-3.

Le fonctionnement du système 3 est le suivant.

Une première image est projetée pendant que l'unité d'imagerie 205 est orientée vers la première zone réfléchissante 213-1. Puis, le moteur 209 déplace en rotation l'unité d'imagerie 205 en direction de la deuxième zone réfléchissante 213-2 et l'unité d'imagerie 205 projette la deuxième image. Le moteur 209 déplace alors l'unité d'imagerie 205 en direction de la troisième zone réfléchissante 213-3 et l'unité d'imagerie 205 projette la troisième image. Le cycle recommence alors avec la première image.

On comprend que ce cycle s'effectue à une fréquence telle que la persistance rétinienne donne l'impression à l'observateur que l'image est affichée en permanence sur le combinateur 215. La fréquence est donc supérieure ou égale à 20 images par seconde.

L'invention a été illustrée et décrite en détail dans les dessins et la description précédente. Celle-ci doit être considérée comme illustrative et donner à titre d'exemple et non comme limitant l'invention a cette seule description. De nombreuses variantes de réalisation sont possibles.

Dans une première variante, le mouvement de rotation de l'unité d'imagerie est réalisé par un moteur pas-à-pas positionné directement sur l'axe de rotation ou via une courroie ou un engrenage.

Dans une deuxième variante, le nombre de flux d'images et le nombre de surfaces réfléchissantes sont différents. Cela permet, par exemple, de moduler les plans d'affichage en fonction du contexte. Ainsi un plan proche ne sera pas utilisé en mode normal, mais servira uniquement lorsqu'un message d'alerte doit être affiché.

Dans une troisième variante, pour diminuer les coûts, le système est conçu pour deux flux d'images et avec deux zones réfléchissantes.

## Revendications

1. Système d'affichage (103) tête haute d'un véhicule automobile (101) comprenant :
• une unité d'imagerie (205) adaptée pour projeter une pluralité de flux d'images sur;
• un miroir (211) comprenant une pluralité de zones réfléchissantes (213) ; et
• un combinateur (215) ; et dans lequel
• chaque zone réfléchissante (213) renvoyant un flux d'images de la pluralité de flux d'images vers le combinateur (215), le chemin optique entre l'unité d'imagerie (205) et le combinateur (215) associé à une zone réfléchissante (213) est de longueur différente de celles des chemins optiques associés aux autres zones réfléchissantes de sorte à former sur le combinateur, pour un observateur, des plans (219) avec des profondeurs de champ différentes pour chaque flux d'images projeté via une des zones réfléchissantes ; et l'unité d'imagerie (205) est mobile en rotation autour d'un axe (207) et mue par un moteur (209) synchronisé avec l'unité d'imagerie pour projeter successivement chaque flux d'images sur une zone réfléchissante déterminée.

2. Système selon la revendication 1, dans lequel la fréquence d'affichage d'une image donnée est supérieure à 20 images par seconde.

3. Système selon la revendication 1 ou 2, comprenant en outre une came (210) pilotée par le moteur et associée à l'unité d'imagerie pour faire osciller l'unité d'imagerie autour de l'axe.

4. Système selon la revendication 1, 2 ou 3, comprenant en outre un capteur de position angulaire (214) de l'unité d'imagerie connecté à l'unité d'imagerie pour synchroniser les flux d'images avec la position de l'unité d'imagerie.

5. Système selon la revendication 1, 2, 3 ou 4, dans lequel il y a autant de flux d'images à projeter que de zones réfléchissantes.

6. Système selon l'une quelconque des revendications précédentes, dans lequel les flux d'images sont formés d'images évoluant avec le temps.

7. Système selon l'une quelconque des revendications précédentes, dans lequel le miroir comprend deux ou trois zones réfléchissantes.

8. Véhicule automobile comprenant un système selon l'une quelconque des revendications précédentes.

## Patentansprüche

1. Anzeigesystem (103) mit hohem Kopf eines Kraftfahrzeugs (101), bestehend aus:
• eine Bildgebungseinheit (205), die mehrere Bildströme auf die
• einen Spiegel (211) mit einer Vielzahl von reflektierenden Bereichen (213); und
• jeder reflektierende Bereich (213), der einen Bildstrom aus der Vielzahl von Bildströmen zum Kombinierer (215) zurückgibt, wobei der optische Weg zwischen der Abbildungseinheit (205) und dem Kombinierer (215), der einem reflektierenden Bereich (213) zugeordnet ist, eine andere Länge als die optischen Wege hat, die den anderen reflektierenden Bereichen zugeordnet sind, sodass für einen Betrachter auf dem Kombinierer Ebenen (219) mit unterschiedlichen Feldtiefen für jeden Bildstrom gebildet werden, der über einen der reflektierenden Bereiche projiziert wird; und die Abbildungseinheit (205) um eine Achse (207) drehbar ist und von einem mit der Abbildungseinheit synchronisierten Motor (209) angetrieben wird, um nacheinander jeden Bildstrom auf einen bestimmten reflektierenden Bereich zu projizieren.

2. System nach Anspruch 1, wobei die Anzeigefrequenz eines gegebenen Bildes größer als 20 Bilder pro Sekunde ist.

3. System nach Anspruch 1 oder 2, das des Weiteren eine motorgesteuerte Nocke (210) umfasst, die der Abbildungseinheit zugeordnet ist, um die Abbildungseinheit um die Achse zu schwingen.

4. System nach Anspruch 1, 2 oder 3, das des Weiteren einen Winkelpositionssensor (214) der Abbildungseinheit umfasst, der mit der Abbildungseinheit verbunden ist, um die Bildströme mit der Position der Abbildungseinheit zu synchronisieren.

5. System nach Anspruch 1, 2, 3 oder 4, bei dem ebenso viele Bildströme zu projizieren sind wie reflektierende Bereiche.

6. System nach einem der vorhergehenden Ansprüche, bei dem die Bildströme aus Bildern gebildet sind, die sich mit der Zeit ändern.

7. System nach einem der vorhergehenden Ansprüche, bei dem der Spiegel zwei oder drei reflektierende Bereiche umfasst.

8. Kraftfahrzeug mit einem System nach einem der vorhergehenden Ansprüche.

## Claims

1. Motor display system (103) comprising:
• an imaging unit (205) adapted to project a plurality of image flows onto;
• a mirror (211) comprising a plurality of reflective zones (213); and
• a combiner (215); and in which
• with each reflecting zone (213) returning an image flow from the plurality of image flows to the combiner (215), the optical path between the imaging unit (205) and the combiner (215) associated with a reflecting zone (213) is of a different length from those of the optical paths associated with the other reflecting zones so as to form on the combiner, for an observer, drawings (219) with different depths of field for each image flow projected via one of the reflecting zones; and the imaging unit (205) is rotatably mobile about an axis (207) and driven by an engine (209) synchronised with the imaging unit to successively project each given reflecting flow.

2. System according to claim 1, wherein the display frequency of a given image is greater than 20 images per second.

3. System according to claim 1 or 2, further comprising a cam (210) driven by the engine and associated with the imaging unit to cause the imaging unit to oscillate about the axis.

4. System according to claim 1, 2 or 3, further comprising an angular position sensor (214) of the imaging unit connected to the imaging unit to synchronise the image flows with the position of the imaging unit.

5. System according to claim 1, 2, 3 or 4, in which there are as many flows of images to be projected as there are reflective zones.

6. System according to claim 1, wherein the image flows are previous of images that change over time.

7. System as claimed in claim 1, wherein the mirror comprises two or three reflecting zones.

8. Motor vehicle comprising a system according to any one of the previous claims.
